# EUROPEAN PATENT SPECIFICATION

(11) **EP 4 406 754 B1**
(45) Date of publication and mention of the grant of the patent: **21.05.2025**
(21) Application number: 23153249.0
(22) Date of filing: 25.01.2023
(51) Int. Cl.: B60B 5/02, B29C 70/24, B29D 99/00, B60B 21/12, B29C 53/58, B60B 21/00, B29L 31/32

(54) **COMPOSITE RIM**
VERBUNDFELGE
JANTE COMPOSITE

(43) Date of publication of application: 31.07.2024
(73) Proprietor: Marshal Industrial Corp., VG1110 Tortola (VG)
(72) Inventor: Tsai, Ming-Jen, Zhunan Township, Miaoli County 350 (TW); Hung, Chao-Chen, Zhunan Township, Miaoli County 350 (TW); Yu, Shih-Tse, Zhunan Township, Miaoli County 350 (TW)
(74) Representative: Lang, Christian

(56) References cited:
- US-A1- 2012 301 654
- US-B2- 9 149 992

## Description

### BACKGROUND OF THE INVENTION

### Field of the Invention

The present invention relates to a composite rim.

### Description of the Prior Art

A conventional method of manufacturing a carbon fiber rim includes following steps: pre-immersing carbon fiber sheets in resin, pasting the carbon fiber sheets with the resin on an annular core (such as a bladder) into several layers; and placing the processed annular core in a mold and molding by thermoforming.

However, the conventional method has many disadvantages. For example, the pre-immersed carbon fiber sheets need to be pasted by manpower, which is time-consuming and labor-intensive; directions of carbon fibers of the carbon fiber sheets are inconsistent and discontinuous, and transmission of stress may be discontinuous when the carbon fiber sheets are overlapped with each other so that structural integrity and structural strength of the wheel rim are poor; each of the overlaps of the carbon fiber sheets has large, many and uneven gaps which can result in more large bubbles after the thermoforming and low yield. US2012/301654A1 discloses the preamble of claim 1.

The present invention is, therefore, arisen to obviate or at least mitigate the above-mentioned disadvantages.

### SUMMARY OF THE INVENTION

The main object of the present invention is to provide a composite rim which has good structural strength and better flatness.

To achieve the above and other objects, a composite rim is provided, including: an annular body extending around a center, an imaginary annular line being defined on an outer surface of the annular body, the imaginary annular line extending around the center; and at least one composite fiber strip, spirally disposed around the imaginary annular line for at least 360 degrees and attached to the outer surface of the annular body, opposing ends of each of the at least one composite fiber strip in a longitudinal direction of the at least one composite fiber strip being aligned with the imaginary annular line.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a partial stereogram of a preferable embodiment of the present invention;
Figs. 2 and 3 are drawings showing at least one composite fiber strip spirally disposed around an annular body according to a preferable embodiment of the present invention;
Fig. 4 is a top view Fig. 1; and
Fig. 5 is a schematic drawing of a preferable embodiment of the present invention.

### DETAILED DESCRIPTION OF THE PREFERRED EMBODIMENTS

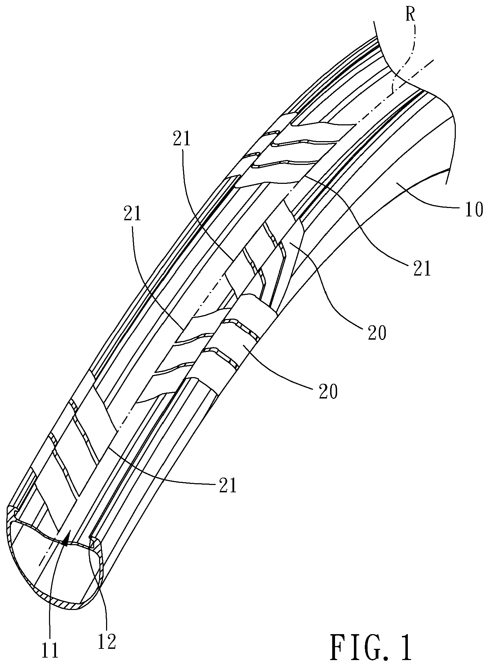

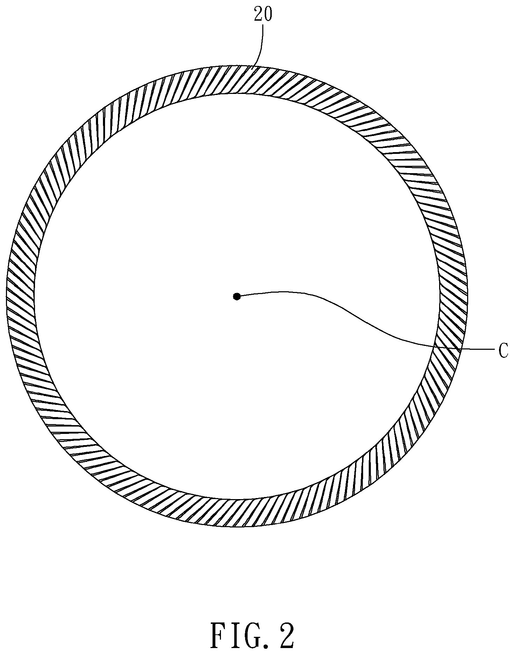

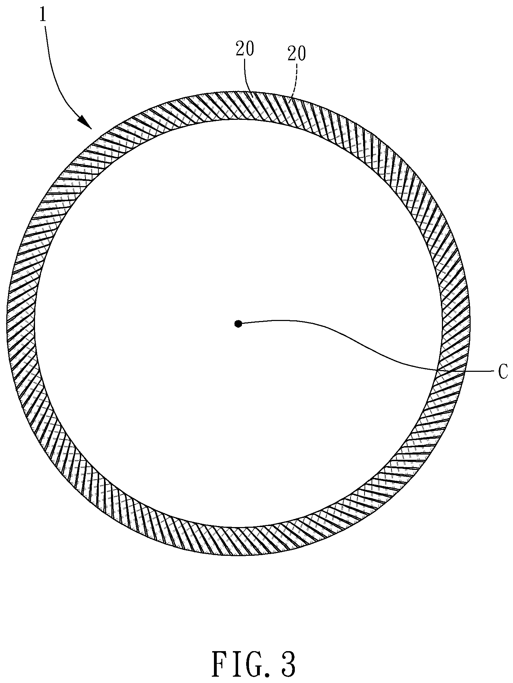

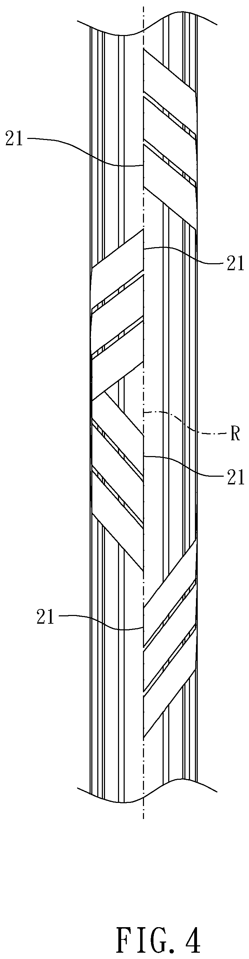

Please refer to Figs. 1 to 4 for a preferable embodiment of the present invention. A composite rim 1 of the present invention includes an annular body 10 and at least one composite fiber strip 20.

The annular body 10 extends around a center C, an imaginary annular line R is defined on an outer surface of the annular body 10, and the imaginary annular line R extends around the center C. The at least one composite fiber strip 20 is spirally disposed around the imaginary annular line R for at least 360 degrees and attached to the outer surface of the annular body 10, and opposing ends 21 of each of the at least one composite fiber strip 20 in a longitudinal direction of the at least one composite fiber strip 20 are aligned with the imaginary annular line R. The at least one composite fiber strip 20 can be, for example, made of carbon fiber or other fiber strips pre-impregnated with resin. As such, it is equivalent to that only a single break point formed by each of the at least one composite fiber strip 20 which spirals for at least one circle, which provides excellent structural strength and better flatness.

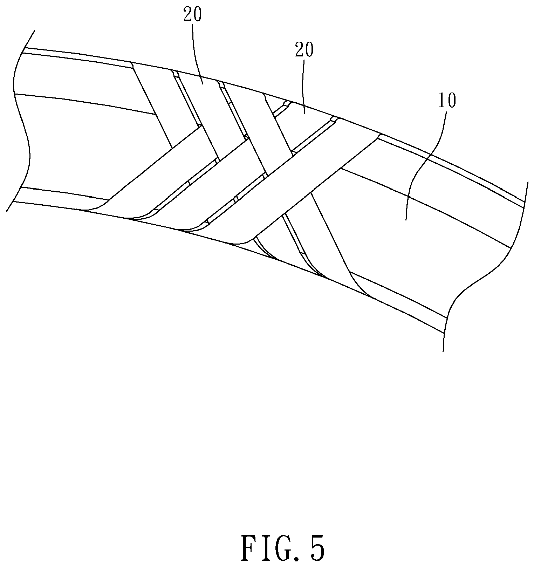

In this embodiment, the at least one composite fiber strip includes a plurality of composite fiber strips 20, and at least two of the plurality of composite fiber strips 20 spiral in different angles. Preferably, the at least two of the plurality of composite fiber strips 20 spiral in opposing directions (clockwise and counterclockwise, for example), the at least two of the plurality of composite fiber strips 20 are at least partially overlap with each other; however, the plurality of composite fiber strips 20 may be interlaced with each other (Fig. 5), which can comprehensively, omnidirectionally and evenly enhance and strengthen the structural strength, and evenly distribute the stress.

Specifically, the opposing ends 21 of each of the at least one composite fiber strip 20 are not overlap with each other on the imaginary annular line R; one of the opposing ends 21 of one of the plurality of composite fiber strips 20 is located between the opposing ends 21 of another one of the plurality of composite fiber strips 20; however, in an embodiment of the present disclosure which is not part of the claimed invention, the opposing ends 21 of each of the at least one composite fiber strip 20 may be at least partially or entirely overlap with each other on the imaginary annular line R. The aforementioned arrangements of the at least one composite fiber strip 20 contributes to the flatness of the surface of the composite rim 1. Preferably, the at least two of the plurality of composite fiber strips 20 are perpendicular to each other, which increases the structural strength and effectively and evenly distribute the stress. Preferably, relative to the center C the at least one composite fiber strip 20 is arranged along the imaginary annular line R for at least 350 degrees. As such, the entire range of the outer surface of the annular body 10 is almost or completely wrapped continuously and uninterruptedly, so that the structure has good integrity and structural strength, the manufacturing process is simple and the yield is high.

In this embodiment, the annular body 10 includes a tire installation groove 11, the annular body 10 further includes two annular lips 12, the two annular lips 12 project toward each other from two peripheries of the tire installation groove 11, the imaginary annular line R extends within the tire installation groove 11, and the at least one composite fiber strip 20 is conformably adhered to a surface of the tire installation groove 11. As such, the thinner side wall of the tire installation groove 11 can be highly strengthened and is not easy to be damaged and deformed. It is noted that the tire installation groove may be provided without the two annular lips and can be adapted to a tubular tire; the imaginary annular line may extend annularly on other sides of the annular body 10 but not within the tire installation groove 11.

Although particular embodiments of the invention have been described in detail for purposes of illustration, various modifications and enhancements may be made without departing from the scope of the invention. Accordingly, the invention is not to be limited except as by the appended claims.

## Claims

1. A composite rim (1), including:
an annular body (10) extending around a center (C), an imaginary annular line (R) being defined on an outer surface of the annular body (10), the imaginary annular line (R) extending around the center (C); and
at least one composite fiber strip (20), spirally disposed around the imaginary annular line (R) for at least 360 degrees and attached to the outer surface of the annular body (10), **characterized in that** opposing ends (21) of each of the at least one composite fiber strip (20) in a longitudinal direction of the at least one composite fiber strip (20) are - aligned with the imaginary annular line (R).

2. The composite rim (1) of claim 1, wherein the at least one composite fiber strip (20) includes a plurality of composite fiber strips (20), and at least two of the plurality of composite fiber strips (20) spiral in different angles.

3. The composite rim (1) of claim 2, wherein the at least two of the plurality of composite fiber strips (20) spiral in opposing directions.

4. The composite rim (1) of claim 3, wherein the at least two of the plurality of composite fiber strips (20) are at least partially overlap with each other.

5. The composite rim (1) of claim 1, wherein the at least one composite fiber strip (20) includes a plurality of composite fiber strips (20), and one of the opposing ends (21) of one of the plurality of composite fiber strips (20) is located between the opposing ends (21) of another one of the plurality of composite fiber strips (20).

6. The composite rim (1) of claim 1, wherein the opposing ends (21) of each of the at least one composite fiber strip (20) are not overlap with each other on the imaginary annular line (R).

7. The composite rim (1) of claim 4, wherein the at least two of the plurality of composite fiber strips (20) are perpendicular to each other; relative to the center (C) the at least one composite fiber strip (20) is arranged along the imaginary annular line (R) for at least 350 degrees; one of the opposing ends (21) of one of the plurality of composite fiber strips (20) is located between the opposing ends (21) of another one of the plurality of composite fiber strips (20); the opposing ends (21) of each of the at least one composite fiber strip (20) are not overlap with each other on the imaginary annular line (R).

8. The composite rim (1) of claim 1, wherein the annular body (10) includes a tire installation groove (11), and the imaginary annular line (R) extends within the tire installation groove (11).

9. The composite rim (1) of claim 8, wherein the at least one composite fiber strip (20) is conformably adhered to a surface of the tire installation groove (11).

10. The composite rim (1) of claim 8, wherein the annular body (10) further includes two annular lips (12), and the two annular lips (12) project toward each other from two peripheries of the tire installation groove (11).

## Patentansprüche

1. Verbundfelge (1), welche umfasst:
einen ringförmigen Körper (10), der sich um ein Zentrum (C) erstreckt, wobei an einer äußeren Oberfläche des ringförmigen Körpers (10) eine imaginäre ringförmige Linie (R) definiert ist, wobei sich die imaginäre ringförmige Linie (R) um das Zentrum (C) erstreckt; und
mindestens einen Verbundfaserstreifen (20), der spiralförmig um die imaginäre ringförmige Linie (R) über mindestens 360 Grad angeordnet und an der äußeren Oberfläche des ringförmigen Körpers (10) befestigt ist, **dadurch gekennzeichnet, dass**
gegenüberliegende Enden (21) von jedem des mindestens einen Verbundfaserstreifens (20) in einer Längsrichtung des mindestens einen Verbundfaserstreifens (20) mit der imaginären ringförmigen Linie (R) ausgerichtet sind.

2. Verbundfelge (1) nach Anspruch 1, bei welcher der mindestens eine Verbundfaserstreifen (20) eine Vielzahl von Verbundfaserstreifen (20) beinhaltet und mindestens zwei der Vielzahl von Verbundfaserstreifen (20) in unterschiedlichen Winkeln spiralförmig verlaufen.

3. Verbundfelge (1) nach Anspruch 2, bei welcher die mindestens zwei der Vielzahl von Verbundfaserstreifen (20) spiralförmig in entgegengesetzte Richtungen verlaufen.

4. Verbundfelge (1) nach Anspruch 3, bei welcher die mindestens zwei der Vielzahl von Verbundfaserstreifen (20) zumindest teilweise miteinander überlappen.

5. Verbundfelge (1) nach Anspruch 1, bei welcher der mindestens eine Verbundfaserstreifen (20) eine Vielzahl von Verbundfaserstreifen (20) beinhaltet und sich eines der gegenüberliegenden Enden (21) von einem der Vielzahl von Verbundfaserstreifen (20) zwischen den gegenüberliegenden Enden (21) von einem anderen der Vielzahl von Verbundfaserstreifen (20) befindet.

6. Verbundfelge (1) nach Anspruch 1, bei welcher die gegenüberliegenden Enden (21) von jedem des mindestens einen Verbundfaserstreifens (20) an der imaginären ringförmigen Linie (R) nicht miteinander überlappen.

7. Verbundfelge (1) nach Anspruch 4, bei welcher die mindestens zwei der Vielzahl von Verbundfaserstreifen (20) senkrecht zueinander sind; wobei der mindestens eine Verbundfaserstreifen (20) relativ zum Zentrum (C) für mindestens 350 Grad entlang der imaginären ringförmigen Linie (R) angeordnet ist; wobei sich eines der gegenüberliegenden Enden (21) von einem der Vielzahl von Verbundfaserstreifen (20) zwischen den gegenüberliegenden Enden (21) von einem anderen der Vielzahl von Verbundfaserstreifen (20) befindet; wobei die gegenüberliegenden Enden (21) von jedem des mindestens einen Verbundfaserstreifens (20) an der imaginären ringförmigen Linie (R) nicht miteinander überlappen.

8. Verbundfelge (1) nach Anspruch 1, bei welcher der ringförmige Körper (10) eine Reifenmontagenut (11) aufweist und sich die imaginäre ringförmige Linie (R) innerhalb der Reifenmontagenut (11) erstreckt.

9. Verbundfelge (1) nach Anspruch 8, bei welcher der mindestens eine Verbundfaserstreifen (20) konform an einer Oberfläche der Reifenmontagenut (11) anhaftet.

10. Verbundfelge (1) nach Anspruch 8, bei welcher der ringförmige Körper (10) ferner zwei ringförmige Lippen (12) aufweist, und die beiden ringförmigen Lippen (12) von zwei Randbereichen der Reifenmontagenut (11) zueinander vorstehen.

## Revendications

1. Jante composite (1), incluant :
un corps annulaire (10) s'étendant autour d'un centre (C), une ligne annulaire imaginaire (R) étant définie sur une surface extérieure du corps annulaire (10), la ligne annulaire imaginaire (R) s'étendant autour du centre (C) ; et
au moins une bande de fibre composite (20), disposée en spirale autour de la ligne annulaire imaginaire (R) sur au moins 360 degrés et fixée à la surface extérieure du corps annulaire (10), **caractérisée en ce que** les extrémités opposées (21) de chacune de la au moins une bande de fibre composite (20) dans une direction longitudinale de la au moins une bande de fibre composite (20) est alignée avec la ligne annulaire imaginaire (R).

2. Jante composite (1) selon la revendication 1, dans laquelle la au moins une bande de fibre composite (20) inclut une pluralité de bandes de fibres composite (20), et au moins deux de la pluralité de bandes de fibre composite (20) s'enroulent en spirale selon des angles différents.

3. Jante composite (1) selon la revendication 2, dans laquelle les au moins deux de la pluralité de bandes de fibre composite (20) s'enroulent en spirale dans des directions opposées.

4. Jante composite (1) selon la revendication 3, dans laquelle les au moins deux de la pluralité de bandes de fibre composite (20) se chevauchent au moins partiellement.

5. Jante composite (1) selon la revendication 1, dans laquelle la au moins une bande de fibre composite (20) inclut une pluralité de bandes de fibre composite (20), et l'une des extrémités opposées (21) d'une des bandes de fibres composites (20) est située entre les extrémités opposées (21) d'une autre des bandes de fibres composites (20).

6. Jante composite (1) selon la revendication 1, dans laquelle les extrémités opposées (21) de chacune de la au moins une bande de fibre composite (20) ne se chevauche pas sur la ligne annulaire imaginaire (R).

7. Jante composite (1) selon la revendication 4, dans laquelle les au moins deux des bandes de fibre composite (20) sont perpendiculaires l'une à l'autre ; par rapport au centre (C), la au moins une bande de fibre composite (20) est disposée le long de la ligne annulaire imaginaire (R) sur au moins 350 degrés ; l'une des extrémités opposées (21) d'une de la pluralité de bandes de fibre composite (20) est située entre les extrémités opposées (21) d'une autre bande de la pluralité de bandes de fibre composite (20) ; les extrémités opposées (21) de la au moins une bande de fibre composite (20) ne se chevauche pas l'une l'autre sur la ligne annulaire imaginaire (R).

8. Jante composite (1) selon la revendication 1, dans laquelle le corps annulaire (10) inclut une rainure de montage de pneu (11), et la ligne annulaire imaginaire (R) s'étend à l'intérieur de la rainure de montage de pneu (11).

9. Jante composite (1) selon la revendication 8, dans laquelle le au moins une bande de fibre composite (20) adhère de manière conforme à une surface de la rainure de montage de pneu (11).

10. Jante composite (1) selon la revendication 8, dans laquelle le corps annulaire (10) inclut en outre deux lèvres annulaires (12), et les deux lèvres annulaires (12) font saillie l'une vers l'autre à partir de deux périphéries de la rainure de montage du pneu (11).
